# FASCICULE DE BREVET EUROPEEN

(11) **EP 1 908 919 B1**
(45) Date de publication et mention de la délivrance du brevet: **11.11.2009**
(21) Numéro de dépôt: 07116324.0
(22) Date de dépôt: 13.09.2007
(51) Int. Cl.: F01D 5/14, F01D 5/28, F04D 29/38

(54) **Aube composite de turbomachine à renfort métallique**
Verbundlaufradschaufel einer Strömungsmaschine mit Metallverstärkung
Composite vane of a turbomachine with metal reinforcement

(30) Priorité: 26.09.2006 FR 0653937
(43) Date de publication de la demande: 09.04.2008
(73) Titulaire: SNECMA, 75015 Paris (FR)
(72) Inventeur: Giusti, Stéphane, 77720, La Chapelle Gauthier (FR); Jacq, Christophe, 77540, Courpalay (FR); Lombard, Jean-Pierre, 77830, Pamfou (FR); Suffis, Arnaud, 91800, Brunoy (FR)
(74) Mandataire: Boura, Olivier

(56) Documents cités:
- EP-A1- 0 496 550
- DE-C1- 4 411 679
- DE-C1- 19 751 129
- FR-A1- 2 732 406
- GB-A- 1 500 776
- US-A- 3 628 890
- US-A- 4 006 999
- US-A- 5 375 978

## Description

### Arrière-plan de l'invention

La présente invention se rapporte au domaine général des aubes de turbomachine. Elle vise plus particulièrement une aube de soufflante de turbomachine réalisée en matériau composite et dont le bord d'attaque est équipé d'un renfort structurel métallique.

Il est connu d'équiper les aubes de soufflante d'une turbomachine qui sont réalisées en matériau composite d'un renfort structurel métallique s'étendant sur toute la hauteur de l'aube et au-delà de leur bord d'attaque (voir par exemple le document FR-A1-2 732 406). Un tel renfort permet de protéger l'aubage composite lors de l'impact sur la soufflante d'un corps étranger tel qu'un oiseau ingéré par la turbomachine par exemple.

En particulier, le renfort métallique protège le bord d'attaque de l'aube en matériau composite en évitant une délamination dans le cas d'une aube drapée et un endommagement par décohésion fibre/matrice ou par rupture de fibre dans le cas d'une aube tissée.

Toutefois, la présence d'un renfort structurel métallique couvrant le bord d'attaque de l'aube n'est pas toujours efficace pour protéger l'aubage composite lors de l'impact d'un corps étranger.

### Objet et résumé de l'invention

La présente invention a donc pour but principal de pallier un tel inconvénient en proposant une aube composite capable de résister à l'impact d'un corps étranger sans entraîner de dégradation de l'aubage composite.

Ce but est atteint grâce à une aube de turbomachine, comportant une surface aérodynamique s'étendant selon une première direction entre un bord d'attaque et un bord de fuite et selon une deuxième direction sensiblement perpendiculaire à la première entre un pied et un sommet de l'aube, ladite surface aérodynamique étant réalisée en un matériau composite, l'aube comportant en outre un renfort métallique plein collé au bord d'attaque de la surface aérodynamique de l'aube, s'étendant selon la première direction au-delà du bord d'attaque de la surface aérodynamique de l'aube et selon la deuxième direction entre le pied et le sommet de l'aube, caractérisée en ce que le renfort métallique de l'aube comporte au moins un évidement destiné à absorber une partie au moins de l'énergie résultant de l'impact d'un corps étranger sur le bord d'attaque de l'aube.

La présence d'au moins un évidement dans le renfort métallique plein permet à ce dernier d'absorber une part de l'énergie issue de l'impact d'un corps étranger sur l'aube. La dissipation de cette énergie d'impact est obtenue par déformation plastique du renfort métallique. De la sorte, l'impact d'un corps étranger sur l'aube n'entraîne pas de dégradation importante de l'aubage composite.

Selon un mode de réalisation de l'invention, l'évidement s'étend sensiblement selon la première direction. Dans ce cas, l'évidement peut être débouchant au niveau du bord d'attaque de la surface aérodynamique de l'aube et/ou au niveau du bord d'attaque du renfort métallique.

Selon un autre mode de réalisation, l'évidement s'étend sensiblement selon la deuxième direction. Dans ce cas, l'évidement peut être débouchant au niveau du pied de l'aube et/ou au niveau du sommet de l'aube.

Selon encore un autre mode de réalisation, l'évidement s'étend sensiblement selon une troisième direction perpendiculaire à la première et à la deuxième direction. Dans ce cas, l'évidement peut être débouchant au niveau de l'intrados de l'aube et/ou de l'extrados de l'aube.

Le renfort métallique plein peut être réalisé à base de titane. Quant à l'aube, elle peut constituer une aube de soufflante de turbomachine.

L'invention concerne également une turbomachine comportant au moins une aube telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 2 et 3 sont des vues partielles et en coupe de la figure 1 respectivement selon II-II et III-III ;
- les figures 4A et 4B sont des vues partielles et en coupe transversale d'une variante de réalisation de l'aube de la figure 1 ;
- les figures 5A et 5B sont des vues partielles et en coupe transversale d'une aube selon un autre mode de réalisation de l'invention ; et
- les figures 6A et 6B sont des vues partielles et en coupe transversale d'une aube selon encore un autre mode de réalisation de l'invention.

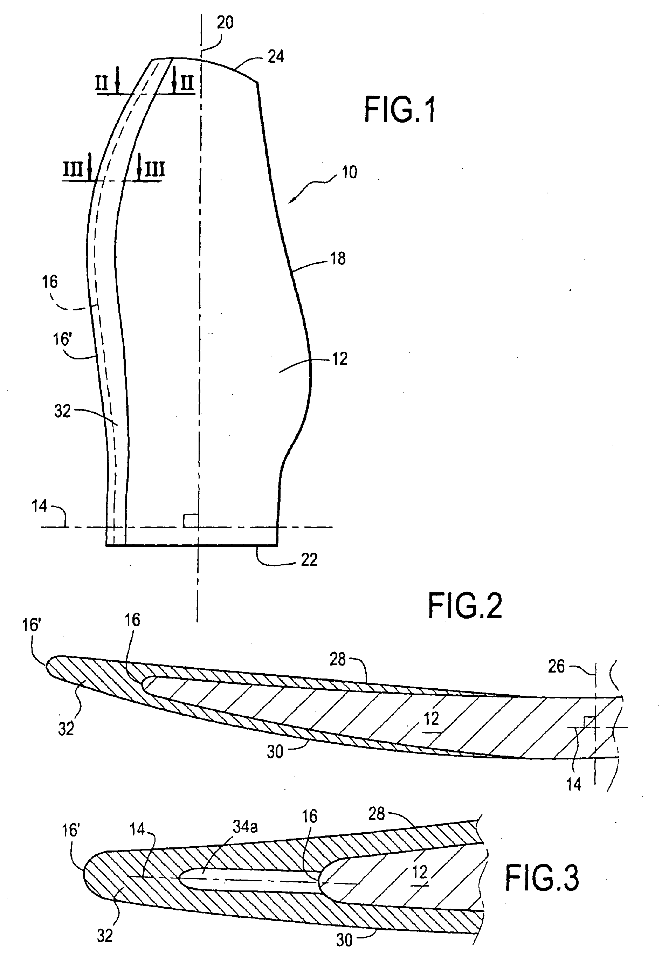

- la figure 1 est une vue en coupe longitudinale d'une aube selon l'invention ;

### Description détaillée de modes de réalisation

Les figures 1 à 3 représentent une aube 10 de turbomachine selon un mode de réalisation de l'invention. Cette aube est par exemple une aube mobile de soufflante d'une turbomachine.

L'aube présente une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24. Comme représenté à la figure 2 qui représente partiellement l'aube selon une coupe transversale, l'aube s'étend également selon une troisième direction tangentielle 26 perpendiculaire à la première et à la deuxième directions entre l'intrados 28 et l'extrados 30. L'intrados et l'extrados de l'aube forment les faces latérales de l'aube qui relient le bord d'attaque 16 au bord de fuite 18 de l'aube.

L'aube, et plus particulièrement sa surface aérodynamique 12 ainsi définie, est obtenue par drapage ou tissage d'un matériau composite. A titre d'exemple, ce matériau composite peut être un assemblage de fibres de carbone tissées et moulées par un procédé d'injection sous vide RTM (pour « Resin Transfer Molding »).

La surface aérodynamique 12 de l'aube selon l'invention comporte un renfort structurel métallique 32 qui est collé à son bord d'attaque 16 et qui s'étend à la fois selon la première direction 14 au-delà du bord d'attaque 16 de la surface aérodynamique de l'aube et selon la deuxième direction 20 entre le pied 22 et le sommet 24 de l'aube.

Comme représenté aux figures 2 et 3, le renfort structurel 32 épouse la forme du bord d'attaque 16 de la surface aérodynamique qu'il prolonge pour former un bord d'attaque 16' appelé ci-après bord d'attaque du renfort. A titre d'exemple, la distance séparant les bords d'attaque 16 et 16' mesurée selon la première direction 14 peut être de l'ordre de 3 à 4 cm pour une aube dont la distance bord d'attaque 16 / bord de fuite 18 atteint 50 cm (ce qui réprésente 6 à 8% de cette distance).

En outre, le renfort structurel 32 s'étend selon la première direction 14 au-delà du bord d'attaque 16 de la surface aérodynamique pour épouser le profil de l'intrados 28 et de l'extrados 30 de l'aube.

Le renfort structurel 32 selon l'invention est plein (ou monobloc), c'est-à-dire qu'aussi bien en coupe transversale qu'en coupe longitudinale, le renfort est rempli de matière. Par exemple, comme représenté à la figure 2, il n'y a pas, en coupe transversale, de discontinuité entre les bords d'attaque 16 et 16'.

Le renfort structurel 32 de l'aube est métallique et est réalisé de préférence à base de titane. Ce matériau présente en effet une grande capacité d'absorption de l'énergie due aux chocs. Le renfort est collé sur l'aube, la colle utilisée pouvant par exemple être une colle cyanoacrylique ou époxy.

Toujours selon l'invention, le renfort métallique 32 de l'aube comporte au moins un évidement destiné à absorber une partie au moins de l'énergie résultant de l'impact d'un corps étranger sur le bord d'attaque de l'aube.

Le nombre, la forme, l'emplacement et l'orientation du ou des évidements du renfort métallique de l'aube peuvent varier en fonction de l'application. Ces paramètres sont déterminés et optimisés en fonction du cas d'impact le plus critique qui peut être rencontré.

On décrira maintenant différentes géométries préférentielles d'évidements du renfort métallique de l'aube selon l'invention.

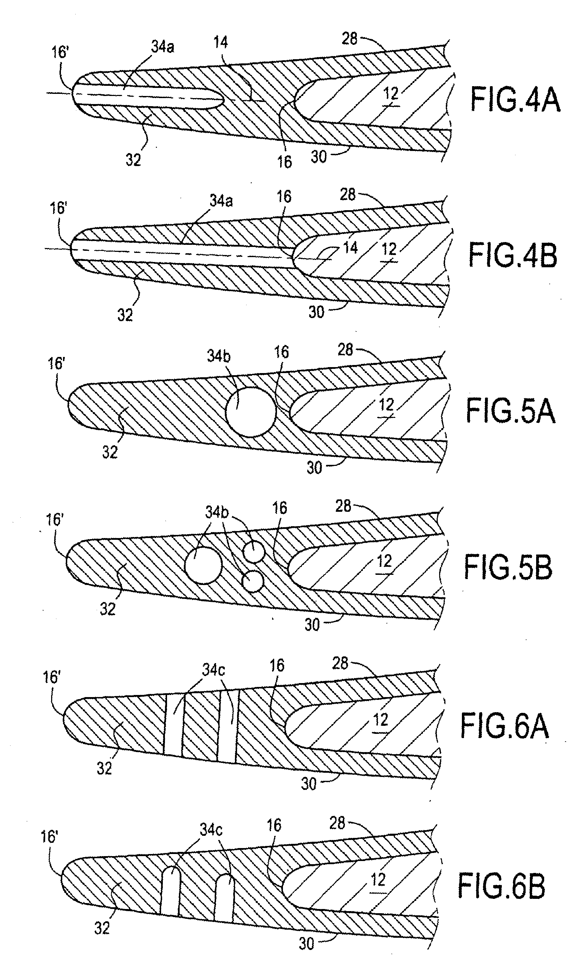

Dans le mode de réalisation des figures 3, 4A et 4B, l'évidement du renfort 32 se présente sous la forme d'une cavité creuse 34a s'étendant selon la première direction 14 de l'aube.

Plus précisément, dans la variante de réalisation de la figure 3, l'évidement est une cavité creuse 34a qui débouche au niveau du bord d'attaque 16 de la surface aérodynamique 12 de l*'*aube.

Dans la variante de la figure 4A, l'évidement est une cavité creuse 34a qui débouche au niveau du bord d'attaque 16' du renfort métallique 32.

Quant à l'évidement 34a de la figure 4B, il débouche à la fois au niveau du bord d'attaque 16 de la surface aérodynamique 12 et au niveau du bord d'attaque 16' du renfort métallique 32.

Dans le mode de réalisation des figures 5A et 5B, l'évidement du renfort 32 se présente sous la forme d'une cavité creuse 34b s'étendant selon la deuxième direction 20 de l'aube.

Cette cavité creuse 34b peut déboucher au niveau du pied 22 et/ou au niveau du sommet 24 de l'aube. Dans le cas d'une cavité creuse débouchant à la fois au niveau du pied et du sommet de l'aube, un flux d'air peut cheminer au travers de l'aube, ce qui contribue à améliorer les performances aérodynamiques de la turbomachine.

En outre, comme représenté à la figure 5A, l'évidement du renfort métallique peut être formé par une seule cavité creuse 34b à section sensiblement circulaire. Alternativement, comme représenté à la figure 5B, l'évidement peut être réalisé par plusieurs cavités (au nombre de trois dans cet exemple de réalisation).

Bien entendu toute autre forme de section est possible (ovale, polygonale, etc.). Par ailleurs, les dimensions de la ou des cavités peuvent varier sur toute la hauteur de l'aube pour s'adapter au couple masse de l'objet étranger impactant l'aube / hauteur de l'aube.

Dans le mode de réalisation des figures 6A et 6B, les évidements du renfort 32 se présentent sous la forme de cavités creuses 34c s'étendant selon la troisième direction 26 de l'aube.

Plus précisément, dans la variante de réalisation de la figure 6A, il est prévu deux évidements formés chacun d'une cavité creuse 34c qui débouche à la fois au niveau de l'intrados 28 de l'aube et au niveau de l'extrados 30 de l'aube. Ainsi, les évidements permettent de véhiculer un flux d'air entre l'intrados et l'extrados ce qui contribue à améliorer les performances aérodynamiques de la turbomachine.

Dans la variante de réalisation de la figure 6B, il est prévu deux évidements formés chacun d'une cavité creuse 34c qui débouche uniquement au niveau de l'extrados 30 de l'aube.

Dans les modes de réalisation des figures 3, 4A, 4B, 5A, 5B, 6A et 6B, les évidements sont réalisés sous la forme de cavités 34a à 34c qui sont creuses.

## Revendications

1. Aube (10) de turbomachine, comportant une surface aérodynamique (12) s'étendant selon une première direction (14) entre un bord d'attaque (16) et un bord de fuite (18) et selon une deuxième direction (20) sensiblement perpendiculaire à la première entre un pied (22) et un sommet (24) de l'aube, ladite surface aérodynamique (12) étant réalisée en un matériau composite, l'aube comportant en outre un renfort métallique plein (32) collé au bord d'attaque (16) de la surface aérodynamique de l'aube, s'étendant selon la première direction (14) au-delà du bord d'attaque de la surface aérodynamique de l'aube et selon la deuxième direction (20) entre le pied et le sommet de l'aube, **caractérisé en ce que** le renfort métallique de l'aube comporte au moins un évidement (34a, 34b, 34c) destiné à absorber une partie au moins de l'énergie résultant de l'impact d'un corps étranger sur le bord d'attaque de l'aube.

2. Aube selon la revendication 1, dans laquelle l'évidement (34a) s'étend sensiblement selon la première direction (14).

3. Aube selon la revendication 2, dans laquelle l'évidement (34a) est débouchant au niveau du bord d'attaque (16) de la surface aérodynamique (12) de l'aube et/ou au niveau du bord d'attaque (16') du renfort métallique plein (32).

4. Aube selon la revendication 1, dans laquelle l'évidement (34b) s'étend sensiblement selon la deuxième direction (20).

5. Aube selon la revendication 4, dans laquelle l'évidement (34b) est débouchant au niveau du pied (22) de l'aube et/ou au niveau du sommet (24) de l'aube.

6. Aube selon la revendication 1, dans laquelle l'évidement (34c) s'étend sensiblement selon une troisième direction (26) perpendiculaire à la première direction (14) et à la deuxième direction (20).

7. Aube selon la revendication 6, dans laquelle l'évidement (34c) est débouchant au niveau de l'intrados (28) de l'aube et/ou de l'extrados (30) de l'aube.

8. Aube selon l'une quelconque des revendications 1 à 7, dans laquelle le renfort métallique plein (32) est réalisé à base de titane.

9. Aube selon l'une quelconque des revendications 1 à 8, constituant une aube de soufflante de turbomachine.

10. Turbomachine comportant au moins une aube (10) selon l'une quelconque des revendications 1 à 9.

## Claims

1. A turbomachine blade (10) comprising an aerodynamic surface (12) extending along a first direction (14) between a leading edge (16) and a trailing edge (18), and along a second direction (20) substantially perpendicular to the first direction between a root (22) and a tip (24) of the blade, said aerodynamic surface (12) being made of a composite material, the blade further including solid metal reinforcement (32) adhesively bonded to the leading edge (16) of its aerodynamic surface, the reinforcement extending along the first direction (14) beyond the leading edge of the aerodynamic surface of the blade and in the second direction (20) between the root and the tip of the blade, **characterized in that** the metal reinforcement of the blade includes at least one recess (34a, 34b, 34c) for absorbing at least a portion of the energy that results from the impact of a foreign body against the leading edge of the blade.

2. A blade according to claim 1, in which the recess (34a) extends substantially along the first direction (14).

3. A blade according to claim 2, in which the recess (34a) opens out at the leading edge (16) of the aerodynamic surface (12) of the blade and/or in the leading edge (16') of the solid metal reinforcement (32).

4. A blade according to claim 1, in which the recess (34b) extends substantially along the second direction (20).

5. A blade according to claim 4, in which the recess (34b) opens out in the vicinity of the root (22) of the blade and/or in the vicinity of the tip (24) of the blade.

6. A blade according to claim 1, in which the recess (34c) extends substantially along a third direction (26) perpendicular to the first direction (14) and to the second direction (20).

7. A blade according to claim 6, in which the recess (34c) opens out in the pressure side (28) of the blade and/or in the suction side (30) of the blade.

8. A blade according to any one of claims 1 to 7, in which the solid metal reinforcement (32) is made on the basis of titanium.

9. A blade according to any one of claims 1 to 8, constituting a blade of a turbomachine fan.

10. A turbomachine including at least one blade (10) according to any one of claims 1 to 9.

## Patentansprüche

1. Schaufel (10) einer Turbomaschine, die eine aerodynamische Fläche (12) aufweist, welche sich in einer ersten Richtung (14) zwischen einer Eintrittskante (16) und einer Austrittskante (18) sowie in einer zur ersten im wesentlichen senkrechten zweiten Richtung (20) zwischen einem Fuß (22) und einer Spitze (24) der Schaufel erstreckt, wobei die aerodynamische Fläche (12) aus einem Verbundwerkstoff gefertigt ist, wobei die Schaufel ferner eine an die Eintrittskante (16) der aerodynamischen Fläche der Schaufel geklebte massive Metallverstärkung (32) aufweist, die sich in der ersten Richtung (14) über die Eintrittskante der aerodynamischen Fläche der Schaufel hinaus sowie in der zweiten Richtung (20) zwischen dem Fuß und der Spitze der Schaufel erstreckt, **dadurch gekennzeichnet, daß** die Metallverstärkung der Schaufel wenigstens eine Ausnehmung (34a, 34b, 34c) umfaßt, die dazu bestimmt ist, wenigstens einen Teil der aus dem Auftreffen eines Fremdkörpers auf die Eintrittskante der Schaufel resultierenden Energie aufzunehmen.

2. Schaufel nach Anspruch 1, bei der die Ausnehmung (34a) sich im wesentlichen in der ersten Richtung (14) erstreckt.

3. Schaufel nach Anspruch 2, bei der die Ausnehmung (34a) im Bereich der Eintrittskante (16) der aerodynamischen Fläche (12) der Schaufel und/oder im Bereich der Eintrittskante (16') der massiven Metallverstärkung (32) durchgehend ist.

4. Schaufel nach Anspruch 1, bei der die Ausnehmung (34b) sich im wesentlichen in der zweiten Richtung (20) erstreckt.

5. Schaufel nach Anspruch 4, bei der die Ausnehmung (34b) im Bereich des Fußes (22) der Schaufel und/oder im Bereich der Spitze (24) der Schaufel durchgehend ist.

6. Schaufel nach Anspruch 1, bei der die Ausnehmung (34c) sich im wesentlichen in einer zur ersten Richtung (14) und zur zweiten Richtung (20) senkrecht verlaufenden dritten Richtung (26) erstreckt.

7. Schaufel nach Anspruch 6, bei der die Ausnehmung (34c) im Bereich der Vorderseite (28) der Schaufel und/oder der Rückseite (30) der Schaufel durchgehend ist.

8. Schaufel nach einem der Ansprüche 1 bis 7, bei der die massive Metallverstärkung (32) auf der Basis von Titan gefertigt ist.

9. Schaufel nach einem der Ansprüche 1 bis 8, die eine Gebläseschaufel einer Turbomaschine bildet.

10. Turbomaschine, die wenigstens eine Schaufel (10) nach einem der Ansprüche 1 bis 9 aufweist.
